# FASCICULE DE BREVET EUROPEEN

(11) **EP 2 288 542 B1**
(45) Date de publication et mention de la délivrance du brevet: **31.10.2012**
(21) Numéro de dépôt: 09784212.4
(22) Date de dépôt: 18.06.2009
(51) Int. Cl.: B64D 27/26, B64D 29/00

(54) **SYSTÈME PROPULSIF D'AÉRONEF**
FLUGZEIGANTRIEBSSYSTEM
AIRCRAFT PROPULSION SYSTEM

(30) Priorité: 25.06.2008 FR 0803553
(43) Date de publication de la demande: 02.03.2011
(73) Titulaire: Snecma, 75015 Paris (FR)
(72) Inventeur: BALK Wouter, F-77000 Melun (FR); DE GALLE Anne-Laure, Marie, Clémence, F-75012 Paris (FR)
(74) Mandataire: Ramey, Daniel
(86) Numéro de dépôt international: PCT/FR2009/000737
(87) Numéro de publication internationale: WO 2010/007226

(56) Documents cités:
- EP-A- 1 571 080

## Description

La présente invention concerne un système propulsif d'aéronef comprenant un moteur à turboréacteur à double flux formé d'au moins un compresseur, une chambre de combustion, une turbine, et une soufflante montée en amont du compresseur et entraînée en rotation par la turbine, le moteur étant entouré par une nacelle délimitant, en aval de la soufflante, une veine annulaire d'écoulement d'un flux secondaire d'air autour des carters du compresseur, de la chambre de combustion et de la turbine, ce flux secondaire assurant la majeure partie de la poussée.

Le système propulsif est accroché à un élément de structure d'un aéronef, tel qu'une aile de cet aéronef, par des moyens qui permettent de transmettre à cet élément de structure les efforts générés par le moteur pendant ses différentes phases de fonctionnement.

Les moteurs à turboréacteur des avions civils modernes sont caractérisés par un grand taux de dilution, c'est à dire par un rapport débit secondaire / débit primaire qui est supérieur à 5 et qui peut atteindre 9 ou 10, afin notamment de réduire les nuisances sonores et la consommation de ces moteurs. Cela se traduit par une réduction des dimensions transversales du corps du turboréacteur entre la soufflante et la turbine (effet « taille de guêpe ») provoquant une diminution de la résistance à la flexion de ce corps.

Les déformations en flexion du corps du turboréacteur provoquent elles-mêmes des déformations du carter autour du rotor, induisant une ovalisation du carter, de nature à réduire les jeux carter-rotor à certains endroits et à les augmenter à d'autres endroits (effet de « distorsion de carcasse »).

Cet effet entraîne une réduction des performances du turboréacteur, notamment parce qu'il oblige à prévoir des jeux en sommet d'aube plus importants.

Les moyens d'accrochage du système propulsif comprennent en général une pièce robuste et massive couramment appelée mât ou pylône, et des moyens de suspension qui relient le moteur au mât. Ces moyens de suspension sont habituellement fixés d'une part sur un ou plusieurs carters du moteur, par exemple sur un carter intermédiaire en amont et sur un carter d'échappement en aval, et d'autre part sur une partie inférieure du mât qui s'étend dans la veine secondaire et est en général entourée par des parois de guidage du flux secondaire, formant ce que l'on nomme parfois la « bifurcation à 12 heures ».

Ces moyens connus de fixation, voir par exemple EP 1571080, présentent plusieurs inconvénients.

L'accrochage du système propulsif au mât de l'aéronef par des moyens de suspension fixés à des carters entraîne des pincements au niveau de ces carters et favorise les effets de distorsion et de désalignement des différents éléments tournants du moteur, ce qui conduit à des pertes de rendement et entraîne une augmentation de la consommation en carburant.

De plus, la reprise du couple de torsion, induit par la rotation des éléments tournants du moteur, au niveau de la suspension aval, impose l'utilisation de moyens d'attache large et d'une bifurcation à 12 heures d'autant plus large dans le cas d'un mât pénétrant partiellement dans la veine secondaire.

Pour un même taux de dilution, cela impose donc d'augmenter les dimensions radiales de la nacelle, ce qui engendre une traînée plus importante et rend plus difficile l'intégration de turboréacteurs à grand taux de dilution.

L'invention a notamment pour but d'apporter une solution simple, économique et efficace à ces problèmes, permettant d'éviter les inconvénients de la technique connue.

Elle a notamment pour objet un système propulsif d'aéronef dont la nacelle joue un rôle structural pour rigidifier le moteur et en limiter les distorsions mécaniques, et dont les moyens de suspension à l'aéronef permettent de limiter les reprises d'efforts ponctuelles et les pincements au niveau du corps du moteur ainsi que l'encombrement de la bifurcation à 12 heures autour du mât, tout en assurant une bonne transmission des efforts entre le moteur et l'aéronef.

Elle propose à cet effet un système propulsif d'aéronef, comprenant un moteur à turboréacteur à double flux entouré par une nacelle délimitant un espace annulaire d'écoulement d'un flux secondaire, et des moyens d'accrochage du moteur à un mât destiné à être fixé à un élément de structure d'un aéronef, la partie aval de la nacelle comprenant une structure interne de révolution délimitant intérieurement la veine d'écoulement du flux secondaire autour du corps du moteur, caractérisé en ce que la structure interne de la partie aval de la nacelle comprend une ossature rigide formée d'un cadre annulaire amont fixé par boulonnage à un carter intermédiaire du moteur, d'un cadre annulaire aval comprenant des moyens de support d'un carter d'échappement du moteur, et de bras longitudinaux de liaison de ces cadres, et en ce que le cadre annulaire aval de cette structure interne est fixé au mât par des moyens de suspension souple ou articulée.

L'ossature rigide de la structure interne de la partie aval de la nacelle permet à cette structure de participer à la transmission des efforts entre le moteur et le mât, et de jouer ainsi un rôle structurant de manière à limiter les phénomènes de distorsions de carcasse dans le moteur.

La fixation du cadre annulaire aval de cette ossature au mât remplace la fixation habituelle du carter d'échappement à ce mât, et permet d'éviter les pincements au niveau du carter d'échappement.

L'invention permet ainsi notamment de réduire les jeux en sommet d'aubes, et d'un point de vue général, d'améliorer les performances du système propulsif.

Selon une autre caractéristique de l'invention, les moyens de support du carter d'échappement comprennent des biellettes régulièrement réparties autour de l'axe du moteur et dont les extrémités radialement internes sont articulées par des rotules sur une paroi cylindrique rigide du carter d'échappement et les extrémités radialement externes sont articulées par des rotules sur le cadre annulaire aval de la structure interne de la nacelle, les biellettes s'étendant de préférence de manière sensiblement tangentielle au carter d'échappement et dans un plan perpendiculaire à l'axe du moteur.

Ces biellettes permettent une transmission d'efforts, entre le carter d'échappement et le mât, qui est répartie autour de l'axe du moteur, et elles limitent ainsi les risques de pincements locaux au niveau de ce carter, tout en tirant parti d'une manière optimale des propriétés structurantes du cadre annulaire aval.

Dans un mode de réalisation préféré de l'invention :
- les moyens de suspension du cadre annulaire aval comprennent des biellettes articulées de façon rotulante reliant le mât à une partie de sommet du cadre aval et une bielle de reprise de poussée ;
- le cadre annulaire aval comprend un anneau à section en U formant une gorge annulaire qui débouche radialement vers l'extérieur et comporte des moyens d'articulation des biellettes de suspension ;
- les biellettes de suspension comprennent une biellette à trois points en forme de L dont une extrémité d'une grande branche est articulée sur le cadre annulaire aval, et dont une extrémité d'une petite branche est articulée sur une extrémité d'une autre biellette dont l'autre extrémité est articulée sur le cadre annulaire aval.

Les biellettes de suspension du cadre aval au mât permettent une suspension souple, limitant les risques de surcontraintes, et elles présentent en outre l'avantage d'un encombrement réduit, notamment du fait qu'elles peuvent s'étendre partiellement dans la gorge du cadre aval.

La bielle de reprise de poussée est de préférence orientée axialement vers l'aval depuis la partie de sommet du cadre aval.

Cette configuration permet d'éviter le recours à une bielle de reprise de poussée traversant la structure interne de la nacelle.

Selon une autre caractéristique de l'invention, le mât comprend une partie amont s'étendant jusqu'au niveau du carter intermédiaire du moteur et reliée par trois biellettes articulées à une partie de sommet du carter intermédiaire, deux des biellettes s'étendant sensiblement radialement tandis qu'une troisième biellette s'étend de façon sensiblement tangentielle au carter intermédiaire.

Ces biellettes permettent une reprise des efforts latéraux et verticaux ainsi que du couple de torsion induit par la rotation des éléments tournants du moteur, de sorte qu'il ne soit plus nécessaire que les moyens de suspension aval assurent la reprise de ce couple de torsion.

Cela permet de réduire considérablement l'étendue circonférentielle des moyens de suspension aval et l'encombrement de la bifurcation à 12 heures autour du mât, et donc d'augmenter le taux de dilution du moteur pour un même encombrement global, ou de diminuer cet encombrement global à taux de dilution constant.

Dans le mode de réalisation préféré de l'invention, les cadres annulaires amont et aval de la structure interne de la nacelle sont reliés par deux bras longitudinaux s'étendant dans un plan vertical passant par l'axe du moteur, et par deux bras longitudinaux latéraux s'étendant dans un plan horizontal passant par l'axe du moteur.

Selon une autre caractéristique de l'invention, des panneaux de carénage sont fixés sur l'ossature de la structure interne de la nacelle et comportent des parois rigides sensiblement longitudinales de guidage du flux secondaire autour du mât, ces parois comportant des moyens souples de liaison au mât et, de préférence, des trappes d'accès à des servitudes du moteur.

Ces parois longitudinales, du fait de leur liaison au mât, participent à la transmission des efforts entre la structure interne de la nacelle et le mât.

Les panneaux de carénage peuvent également comporter des parois sensiblement longitudinales s'étendant dans une partie de l'espace d'écoulement du flux secondaire diamétralement opposée au mât pour le guidage du flux secondaire autour de servitudes du moteur.

Les panneaux de carénage comportent avantageusement des trappes d'accès amovibles, pour faciliter les opérations de maintenance du moteur.

Le cadre annulaire aval et certains au moins des bras longitudinaux de la structure interne de la nacelle sont réalisés dans un alliage comprenant du nickel, de nature à leur conférer une rigidité et une tenue mécanique optimales, ainsi qu'une bonne résistance à des températures élevées.

Le cadre annulaire amont et les panneaux de carénage de la structure interne de la nacelle sont de préférence en titane.

Le choix du titane permet de réduire la masse de ces éléments de la structure interne de la nacelle, dont il n'est pas nécessaire qu'ils présentent les mêmes performances en termes de rigidité et de tenue.

En variante, et afin de réduire encore la masse de cette structure interne, au moins certains éléments parmi les trappes d'accès des panneaux de carénage, le cadre annulaire amont, les bras longitudinaux, et les panneaux de carénage, sont réalisés en matériau composite.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :
- la figure 1 est une vue schématique en perspective depuis l'amont d'un système propulsif selon l'invention ;
- la figure 2 est une vue schématique partielle en perspective depuis l'amont d'un système propulsif selon l'invention, dont les coquilles semi-cylindriques de l'enveloppe externe aval de la nacelle sont en position d'ouverture et dont les panneaux de carénage de la paroi interne de la nacelle sont démontés, avec arrachement partiel des panneaux de carénage amont de la nacelle ;
- la figure 3 est une vue schématique partielle en perspective depuis l'aval du système propulsif de la figure 1, incluant les panneaux de carénage de la paroi interne de sa nacelle, avec arrachement de la paroi externe de cette nacelle ;
- la figure 4 est une vue schématique partielle en coupe du système propulsif de la figure 1, dans le plan de la structure annulaire aval de la paroi interne de sa nacelle ;
- la figure 5 est une vue schématique partielle en perspective de côté du système propulsif de la figure 1, dont les panneaux de carénage de la paroi interne de la nacelle sont démontés, avec arrachement de la paroi externe de cette nacelle ;
- la figure 6 est une vue schématique partielle en coupe du système propulsif de la figure 1, montrant les moyens de suspension amont du moteur au mât ;
- la figure 7 est une vue schématique partielle en perspective depuis l'aval du système propulsif de la figure 1, montrant les moyens de suspension aval du moteur au mât.

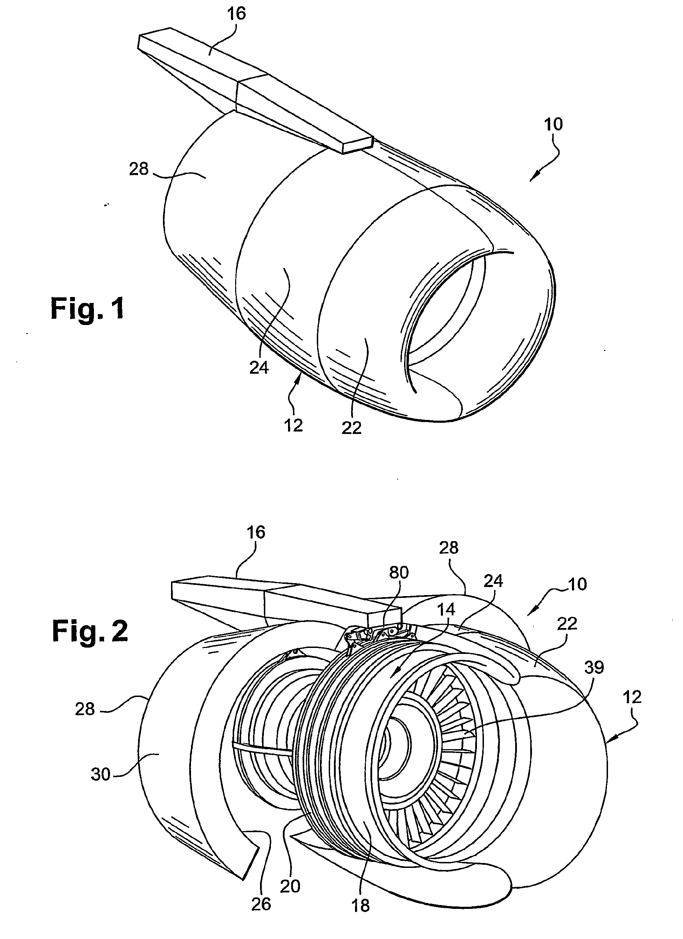

Le système propulsif 10 d'aéronef représenté schématiquement sur les figures 1 et 2 comprend une nacelle 12 de forme générale cylindrique, à l'intérieur de laquelle est monté un moteur 14 à turboréacteur à double flux suspendu à un mât 16 d'accrochage sous une aile d'un aéronef.

Le moteur 14 comprend à l'avant une roue de soufflante entraînée en rotation à l'intérieur d'un carter de soufflante 18, qui est relié à son extrémité aval à une paroi cylindrique externe 20 d'un carter intermédiaire.

La nacelle 12 comprend à l'amont, des panneaux de carénage semi-cylindriques 22, parfois appelés manche d'entrée d'air, et 24, qui entourent le carter de soufflante 18 et la paroi externe 20 du carter intermédiaire, et à l'aval, une enveloppe externe 26 parfois appelée OFS *(Outer Fixed Structure),* qui est formée de deux coquilles semi-cylindriques 28 fixées sur la paroi externe 20 du carter intermédiaire et comportant éventuellement un inverseur de poussée, d'une manière connue. Les coquilles semi-cylindriques de l'enveloppe externe 26 sont articulées au mât 16 par des charnières (non visibles sur les figures) et sont articulées entre elles, à leurs extrémités opposées au mât 16, au moyen de crochets coopérant avec des verrous (non visibles), et elles sont recouvertes de panneaux de capotage 30 destinés à assurer la continuité de l'écoulement aérodynamique autour du système propulsif 10.

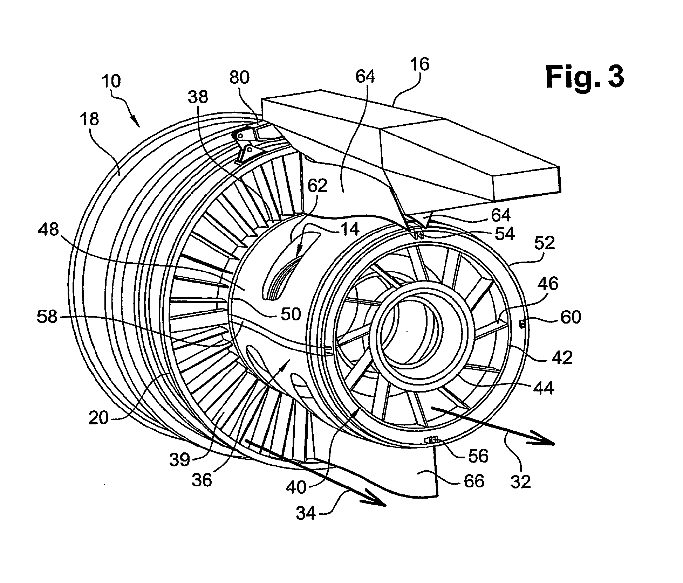

Comme le montre schématiquement la figure3, le flux d'air aspiré par la soufflante est partagé en aval de cette soufflante en un flux primaire 32 passant dans le moteur 14 qui comprend d'amont en aval un compresseur, une chambre de combustion et une turbine, et en un flux secondaire 34 qui s'écoule entre le corps du moteur 14 et l'enveloppe externe 26 de la nacelle et qui fournit la majorité de la poussée à laquelle s'ajoute celle fournie par les gaz de combustion 32 éjectés de la turbine.

La veine d'écoulement du flux secondaire 34 est délimitée extérieurement, en aval du carter intermédiaire, par l'enveloppe externe 26 de la nacelle, et intérieurement, par une structure interne de révolution 36 de cette nacelle, parfois appelée IFS *(Inner Fixed Structure),* qui entoure le corps du moteur et qui s'étend depuis une paroi cylindrique interne 38 du carter intermédiaire, reliée à sa paroi externe 20 par des aubes de stator 39, jusqu'à un carter d'échappement 40 situé en sortie de la turbine et comprenant, de manière connue, deux parois cylindriques coaxiales, respectivement externe 42 et interne 44, reliées par des bras radiaux 46.

La structure interne 36 de la nacelle 12 comprend une ossature rigide sur laquelle sont fixés des panneaux de carénage 48.

L'ossature comprend, comme cela apparaîtra plus clairement dans ce qui suit, deux cadres annulaires, respectivement amont 50 et aval 52, reliés par quatre bras longitudinaux, dont deux bras 54 et 56 s'étendent dans un plan vertical passant par l'axe du moteur, et dont deux bras latéraux 58 et 60 s'étendent dans un plan horizontal passant par l'axe du moteur.

Les panneaux de carénage 48 fixés sur l'ossature comprennent par exemple quatre panneaux en forme de portion de cylindre reliant deux à deux les bras longitudinaux 54, 56, 58, 60 et comportant des ouvertures 62 destinées à être obturées par des trappes amovibles pour permettre l'accès au corps du moteur lors d'opérations de maintenance. En variante, les panneaux de carénage 48 peuvent par exemple comprendre deux panneaux semi-cylindriques reliant les bras longitudinaux 54 et 56.

Chacun des deux panneaux 48 reliés au bras longitudinal 54 s'étendant au sommet du moteur comporte, au niveau de son extrémité fixée à ce bras 54, une paroi 64 s'étendant longitudinalement en direction du mât 16 pour guider le flux secondaire 34 autour de ce mât. Les deux parois de guidage 64 forment ainsi ce que l'on appelle parfois la bifurcation à 12 heures, par analogie avec le cadran d'une horloge, et permettent de limiter les pertes de charges du flux secondaire 34 lors du contournement du mât 16.

D'une manière analogue, les deux panneaux 48 reliés au bras longitudinal 56 diamétralement opposé au mât 16 comprennent, au niveau de leurs extrémités fixées à ce bras 56, des parois 66 de guidage du flux secondaire formant un espace clos, parfois appelé bifurcation à 6 heures, dans lequel peuvent passer des servitudes et équipements du moteur.

Le cadre annulaire amont 50 est fixé par boulonnage sur la paroi interne 38 du carter intermédiaire.

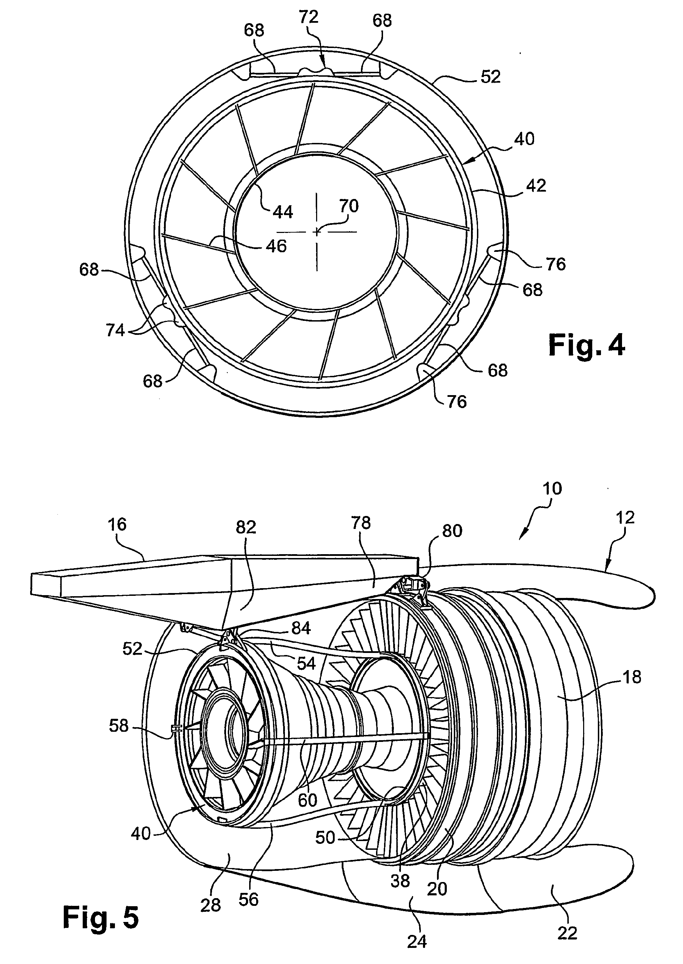

Comme le montre la figure 4, le carter d'échappement 40 est relié au cadre annulaire aval 52 de la structure interne 36 de la nacelle par des biellettes 68 de transmission d'efforts régulièrement réparties autour de l'axe 70 du moteur et dont les extrémités radialement internes sont articulées sur la paroi externe 42 du carter d'échappement et les extrémités radialement externes sont articulées sur le cadre annulaire aval 52.

Dans l'exemple représenté, les biellettes 68 sont au nombre de six et s'étendent toutes dans un même plan transversal en étant réunies par paires au niveau des points d'articulation 72 de leurs extrémités radialement internes sur le carter d'échappement 40, ces points d'articulation 72 comprenant par exemple deux chapes 74 juxtaposées. Les extrémités radialement externes des biellettes 68 sont montées dans des chapes 76 formées ou fixées sur la surface interne du cadre annulaire aval 52, et disposées de sorte que les deux biellettes de chaque paire s'étendent d'une manière sensiblement tangentielle à la paroi externe 42 du carter d'échappement, au niveau de leurs points d'articulation 72 sur cette paroi.

Les extrémités des biellettes 68 sont montées de façon rotulante dans les chapes 74 et 76, de sorte que ces biellettes 68 assurent le support et le centrage du carter d'échappement 40 tout en permettant des dilatations différentielles axiales et radiales entre ce carter et l'ossature de la structure interne 36 de la nacelle.

Comme cela apparaît plus clairement sur la figure 5, montrant le système propulsif 10 dont les panneaux de carénage 48 de la structure interne 36 de la nacelle ont été retirés, le mât 16 comprend une partie amont 78 s'étendant jusqu'au niveau du carter intermédiaire du moteur et portant des moyens de suspension 80 articulés à une partie de sommet de la paroi externe 20 de ce carter intermédiaire, et une partie aval 82 reliée à des moyens de suspension 84 articulés au cadre annulaire aval 52 de la structure interne 36 de la nacelle.

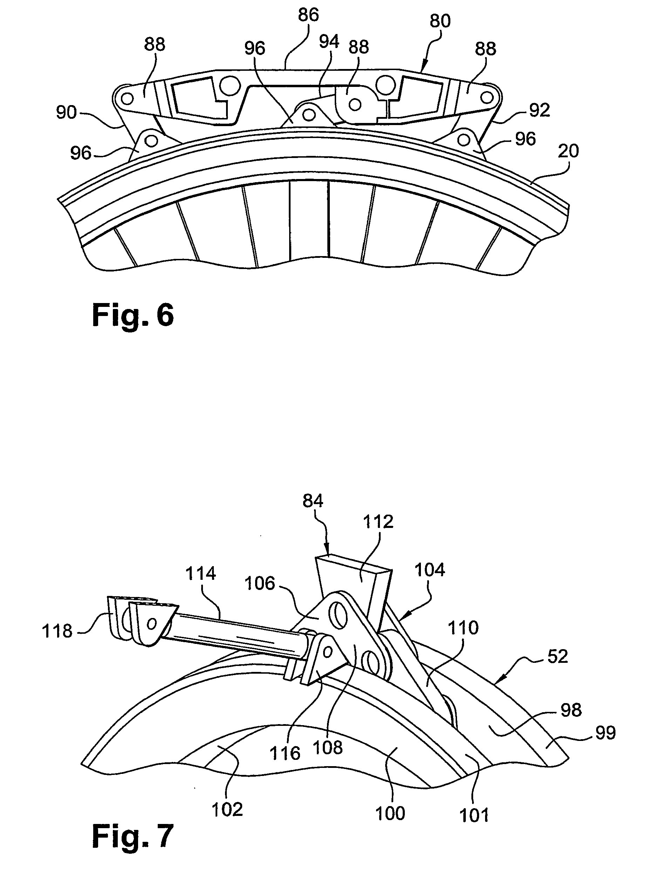

Les moyens de suspension amont 80 sont représentés plus en détail sur la figure 6 et ils comprennent un organe d'accrochage 86 fixé à la partie amont 78 du mât 16 et s'étendant transversalement, tangentiellement au sommet de la paroi externe 20 du carter intermédiaire, cet organe 86 comportant des moyens de fixation 88, du type chape ou analogue, de trois biellettes 90, 92 et 94 reliées à la paroi 20 du carter intermédiaire. Chaque biellette 90, 92 ou 94 a l'une de ses extrémités montée de manière rotulante dans l'un des moyens de fixation 88 de l'organe d'accrochage 86 et l'autre de ses extrémités montée, également de manière rotulante, dans une chape 96 formée ou fixée sur la surface externe de la paroi 20 du carter intermédiaire. Deux biellettes 90 et 92, articulées aux extrémités de l'organe d'accrochage 86, s'étendent sensiblement radialement, tandis que la troisième biellette 94, articulée à une partie intermédiaire de l'organe d'accrochage 86, s'étend de manière sensiblement tangentielle à la paroi 20 du carter intermédiaire, de sorte que les moyens de suspension amont 80 soient aptes à reprendre les efforts latéraux et verticaux, ainsi que le couple de torsion exercé par le moteur.

Comme le montre la figure 7, le cadre annulaire aval 52 de la paroi interne 36 de la nacelle comprend un anneau à section en U comportant deux parois annulaires radiales, respectivement amont 98 et aval 100, formant les paroi latérales de la gorge et reliées à leurs extrémités radialement internes par une paroi annulaire 102 s'étendant axialement et formant le fond de la gorge. Chacune des parois annulaires radiales 98 et 100 comporte un rebord annulaire, respectivement 99 et 101, s'étendant axialement vers l'extérieur de la gorge annulaire.

Les moyens de suspension aval 84 comprennent une biellette à trois points 104 en forme de L dont une extrémité d'une grande branche 106 est articulée dans la gorge du cadre annulaire aval 52, et dont une extrémité d'une petite branche 108 est articulée sur une extrémité d'une autre biellette 110 dont l'autre extrémité est articulée dans la gorge du cadre annulaire aval 52, le sommet de la biellette à trois points 104 étant articulé à une patte de fixation radiale 112 de la partie aval 82 du mât 16.

Les moyens de suspension aval 84 comprennent en outre une bielle de reprise de poussée 114 articulée à l'une de ses extrémités à une chape 116 formée ou fixée sur une partie de sommet du rebord 101 de la paroi radiale aval 100 du cadre annulaire 52 et orientée vers l'aval depuis cette extrémité, la bielle étant articulée, à son autre extrémité, à une chape 118 fixée au mât 16.

Dans la technique actuelle, le carter d'échappement est relié directement au mât, et la bielle de reprise de poussée relie le mât au moyeu du carter intermédiaire, ce qui engendre des pincements locaux de ces carters ayant un impact négatif sur les performances du moteur.

Selon l'invention, le carter d'échappement 40 est supporté par le cadre annulaire aval 52 de la paroi interne 36 de la nacelle, par les biellettes 68 réparties autour de l'axe du moteur, et c'est le cadre aval 52 qui est relié au mât.

Ce cadre aval 52 est réalisé dans un matériau rigide, tel qu'un superalliage à base de nickel, de sorte qu'il permet de répartir les efforts sur le pourtour du carter d'échappement 40 et d'éviter ainsi les pincements locaux de ce dernier.

Les moyens de suspension aval 84 présentent l'avantage d'être particulièrement compacts, notamment par le fait qu'ils s'étendent partiellement dans la gorge du cadre aval 52, et permettent ainsi de réduire l'encombrement de la bifurcation à 12 heures, et d'augmenter d'autant l'espace d'écoulement du flux secondaire 34.

La disposition de la bielle de reprise de poussée 114, reliant le mât 16 au cadre aval 52, permet d'éviter que cette bielle 114 ne traverse la structure interne 36 de la nacelle.

La configuration des moyens de suspension aval 84, du fait de leurs articulations rotulantes, leur confère une souplesse permettant de limiter les risques de surcontraintes au niveau de la suspension aval.

En variante, les moyens de suspension aval peuvent comprendre des éléments en élastomère, pour offrir des avantages comparables en termes de souplesse.

Selon l'invention, la structure interne 36 de la nacelle a un rôle structurant, et permet de limiter les phénomènes de distorsion de carcasse et de désalignement d'éléments tournants dans le moteur.

Pour cela, outre le cadre aval 52, les bras longitudinaux 54, 56, 58 et 60 de la structure interne 36 de la nacelle sont également en un matériau rigide, tel qu'un superalliage à base de nickel.

Le cadre amont 50, du fait qu'il est boulonné sur la paroi interne 38 du carter intermédiaire, peut être en un matériau plus léger, tel que du titane.

Les panneaux 48 de la paroi interne 36 de la nacelle sont également en titane, ainsi que leurs parois longitudinales 64 et 66 formant les bifurcations de la veine d'écoulement du flux secondaire 34.

Les parois 64 de la bifurcation à 12 heures, guidant le flux secondaire autour du mât 16, sont reliées au mât par des moyens souples de liaison, et jouent un rôle structurant.

Les trappes 62 des panneaux 48 et les trappes des parois longitudinales 64 et 66 peuvent être en matériau composite pour permettre un gain de masse et pour faciliter leur montage et leur démontage durant les phases de maintenance du moteur.

En variante, le cadre amont 50, les bras longitudinaux latéraux 58 et 60, ainsi que les panneaux 48 de la structure interne 36 de la nacelle et leurs parois longitudinales 64 et 66 de guidage du flux secondaire, peuvent être en matériau composite, pour permettre un gain de masse plus important.

Il est préférable toutefois que le cadre aval 52 et les bras longitudinaux 54 et 56, respectivement à 12 heures et à 6 heures, soient toujours en un matériau plus résistant à des températures élevées tel qu'un superalliage à base de nickel comme décrit ci-dessus, pour conserver les propriétés structurantes de la structure interne 36 de la nacelle, et permettre un chemin d'efforts différent du moteur lui-même en cas d'incident, comme par exemple lors d'un feu ou de l'éclatement d'une conduite d'air chaud.

La jonction entre les parties en métal rigide et les parties en matériau composite est alors réalisée au moyen de liaisons souples autorisant les dilatations différentielles des matériaux.

Lors d'opérations de maintenance, les deux coquilles semi-cylindriques de l'enveloppe externe 26 de la nacelle pivotent autour de leurs charnières de liaison au mât 16 de manière à autoriser l'accès à la structure interne 36 de la nacelle. Les trappes obturant les ouvertures 62 peuvent alors être retirées pour l'accès au corps du moteur.

En cas de besoin, le moteur peut être désolidarisé du mât 16 et de l'enveloppe externe 26 de la nacelle, cette dernière pouvant rester accrochée au mât.

D'une manière générale, le système propulsif selon l'invention permet, en limitant les phénomènes de distorsion de carcasse, de réduire d'au moins 50% l'impact de ces phénomènes sur la consommation spécifique en carburant du moteur.

La réduction de l'encombrement de la bifurcation à 12 heures permet de réduire l'obturation de la veine secondaire, et donc d'accroître les performances du moteur, et/ou de diminuer le diamètre global de la nacelle.

L'invention permet également de ralentir l'usure des carters du moteur en réduisant considérablement les phénomènes de pincements de ces carters, ce qui induit une réduction des coûts de maintenance du système propulsif.

## Revendications

1. Système propulsif d'aéronef (10), comprenant un moteur à turboréacteur à double flux entouré par une nacelle (12) délimitant un espace annulaire d'écoulement d'un flux secondaire (34), et des moyens (80, 84) d'accrochage du moteur à un mât (16) destiné à être fixé à un élément de structure d'un aéronef, la partie aval de la nacelle (12) comprenant une structure interne de révolution (36) délimitant intérieurement la veine d'écoulement du flux secondaire (34) autour du corps du moteur, **caractérisé en ce que** la structure interne (36) de la partie aval de la nacelle comprend une ossature rigide formée d'un cadre annulaire amont (50) fixé par boulonnage à un carter intermédiaire (38) du moteur, d'un cadre annulaire aval (52) comprenant des moyens (68, 76) de support d'un carter d'échappement (40) du moteur, et de bras longitudinaux (54, 56, 58, 60) de liaison de ces cadres (50, 52), et **en ce que** le cadre annulaire aval (52) de cette structure interne (36) est fixé au mât (16) par des moyens (84) de suspension souple ou articulée.

2. Système propulsif selon la revendication 1, **caractérisé en ce que** les moyens de support du carter d'échappement comprennent des biellettes (68) régulièrement réparties autour de l'axe du moteur et dont les extrémités radialement internes sont articulées par des rotules sur une paroi cylindrique rigide (42) du carter d'échappement (40) et les extrémités radialement externes sont articulées par des rotules sur le cadre annulaire aval (52) de la structure interne (36) de la nacelle.

3. Système propulsif selon la revendication 2, **caractérisé en ce que** les biellettes (68) s'étendent de manière sensiblement tangentielle au carter d'échappement (40) et dans un plan perpendiculaire à l'axe du moteur.

4. Système propulsif selon l'une des revendications précédentes, **caractérisé en ce que** les moyens (84) de suspension du cadre annulaire aval (52) comprennent des biellettes (104, 110) articulées de façon rotulante reliant le mât (16) à une partie de sommet du cadre aval (52), et une bielle de reprise de poussée (114).

5. Système propulsif selon la revendication 4, **caractérisé en ce que** le cadre annulaire aval (52) comprend un anneau (98, 99, 100, 101, 102) à section en U formant une gorge annulaire qui débouche radialement vers l'extérieur et comporte des moyens d'articulation des biellettes de suspension.

6. Système propulsif selon la revendication 4 ou 5, **caractérisé en ce que** les biellettes de suspension comprennent une biellette à trois points (104) en forme de L dont une extrémité d'une grande branche (106) est articulée par une rotule sur le cadre annulaire aval (52), et dont une extrémité d'une petite branche (108) est articulée sur une extrémité d'une autre biellette (110) dont l'autre extrémité est articulée par une rotule sur le cadre annulaire aval (52).

7. Système propulsif selon l'une des revendications 4 à 6, **caractérisé en ce que** la bielle de reprise de poussée (114) est orientée axialement vers l'aval depuis la partie de sommet du cadre aval (52).

8. Système propulsif selon l'une des revendications précédentes, **caractérisé en ce que** le mât (16) comprend une partie amont (78) s'étendant jusqu'au niveau du carter intermédiaire (20, 38, 39) du moteur et reliée par trois biellettes (90, 92, 94) articulées à une partie de sommet du carter intermédiaire (20), deux des biellettes (90, 92) s'étendant sensiblement radialement tandis qu'une troisième biellette (94) s'étend de façon sensiblement tangentielle au carter intermédiaire (20).

9. Système propulsif selon l'une des revendications précédentes, **caractérisé en ce que** les cadres annulaires amont (50) et aval (52) de la structure interne (36) de la nacelle sont reliés par deux bras longitudinaux (54, 56) s'étendant dans un plan vertical passant par l'axe du moteur, et par deux bras longitudinaux latéraux (58, 60) s'étendant dans un plan horizontal passant par l'axe du moteur.

10. Système propulsif selon l'une des revendications précédentes, **caractérisé en ce que** des panneaux de carénage (48) sont fixés sur l'ossature de la structure interne (36) de la nacelle et comportent des parois rigides sensiblement longitudinales (64) de guidage du flux secondaire (34) autour du mât, ces parois (64) comportant des moyens souples de liaison au mât (16).

11. Système propulsif selon la revendication 10, **caractérisé en ce que** les panneaux de carénage (48) comportent des parois sensiblement longitudinales (66) s'étendant dans une partie de l'espace d'écoulement du flux secondaire (34) diamétralement opposée au mât (16) pour le guidage du flux secondaire autour de servitudes du moteur.

12. Système propulsif selon l'une des revendications précédentes, **caractérisé en ce que** le cadre annulaire aval (52) et certains au moins des bras longitudinaux (54, 56, 58, 60) de la structure interne (36) de la nacelle sont réalisés dans un alliage comprenant du nickel.

13. Système propulsif selon l'une des revendications précédentes, **caractérisé en ce que** le cadre annulaire amont (50) et les panneaux de carénage (48) de la structure interne (36) de la nacelle sont en titane.

14. Système propulsif selon l'une des revendications précédentes, **caractérisé en ce qu'**au moins certains éléments parmi les trappes d'accès des panneaux de carénage (48), le cadre annulaire amont (50), les bras longitudinaux (58, 60), et les panneaux de carénage (48), sont réalisés en matériau composite.

## Claims

1. An aircraft propulsion system (10) comprising a bypass turbojet engine surrounded by a nacelle (12) defining an annular flow space for a secondary stream (34), and means (80, 84) for attaching the engine to a pylon (16) for fastening to a structural element of an aircraft, the downstream portion of the nacelle (12) comprising an inner structure (36) forming a body of revolution that defines the inside of the flow section for the secondary stream (34) around the body of the engine, the system being **characterized in that** the inner structure (36) of the downstream portion of the nacelle comprises a rigid framework formed by an upstream annular frame (50) fastened by bolting to an intermediate casing (38) of the engine, a downstream annular frame (52) including support means (68, 76) for supporting an exhaust casing (40) of the engine, and longitudinal arms (54, 56, 58, 60) connecting these frames (50, 52) together, and **in that** the annular downstream frame (52) of the inner structure (36) is fastened to the pylon (16) by flexible or hinged suspension means (84).

2. A propulsion system according to claim 1, **characterized in that** the exhaust casing support means comprise links (68) regularly distributed around the axis of the engine having their radially inner ends hinged via ball joints to a rigid cylindrical wall (42) of the exhaust casing (40), and their radially outer ends hinged via ball joints to the downstream annular frame (52) of the inner structure (36) of the nacelle.

3. A propulsion system according to claim 2, **characterized in that** the links (68) extend substantially tangentially to the exhaust casing (40) and in a plane perpendicular to the axis of the engine.

4. A propulsion system according to any preceding claim, **characterized in that** the suspension means (84) for suspending the downstream annular frame (52) comprise links (104, 110) hinged via ball joints and connecting the pylon (16) to a top portion of the downstream frame (52), together with a thrust take-up connecting rod (114).

5. A propulsion system according to claim 4, **characterized in that** the downstream annular frame (52) comprises a channel-section ring (98, 99, 100, 101, 102) forming an annular channel that is open radially outwards and that includes hinge means for the suspension links.

6. A propulsion system according to claim 4 or claim 5, **characterized in that** the suspension links comprise a three-point link (104) of L-shape having one end of a long branch (106) hinged via a ball joint to the downstream annular frame (52), and having one end of a short branch (108) hinged to one end of another link (110) whose other end is hinged by a ball joint to the downstream annular frame (52).

7. A propulsion system according to any one of claims 4 to 6, **characterized in that** the thrust take-up connecting rod (114) is oriented axially downstream from the top portion of the downstream frame (52).

8. A propulsion system according to any preceding claim, **characterized in that** the pylon (16) has an upstream portion (78) extending up to the intermediate casing (20, 38, 39) of the engine and connected by three links (90, 92, 94) that are hinged to a top portion of the intermediate casing (20), two of the links (90, 92) extending substantially radially, while a third link (94) extends substantially tangentially to the intermediate casing (20).

9. A propulsion system according to any preceding claim, **characterized in that** the upstream and downstream annular frames (50, 52) of the inner structure (36) of the nacelle are connected together by two longitudinal arms (54, 56) extending in a vertical plane containing the axis of the engine, and by two lateral longitudinal arms (58, 60) extending in a horizontal plane containing the axis of the engine.

10. A propulsion system according to any preceding claim, **characterized in that** fairing panels (48) are fastened to the framework of the inner structure (36) of the nacelle and include substantially longitudinal rigid walls (64) for guiding the secondary stream (34) around the pylon, these walls (64) including flexible means connecting them to the pylon (16).

11. A propulsion system according to claim 10, **characterized in that** the fairing panels (48) comprise substantially longitudinal walls (66) extending in a portion of the flow space for the secondary stream (34) that is diametrically opposite from the pylon (16) in order to guide the secondary stream around services for the engine.

12. A propulsion system according to any preceding claim, **characterized in that** the downstream annular frame (52) and at least some of the longitudinal arms (54, 56, 58, 60) of the inner structure (36) of the nacelle are made of an alloy including nickel.

13. A propulsion system according to any preceding claim, **characterized in that** the upstream annular frame (50) and the fairing panels (48) of the inner structure (36) of the nacelle are made of titanium.

14. A propulsion system according to any preceding claim, **characterized in that** at least some of the elements selected from the access hatches of the fairing panels (48), the upstream annular frame (50), the longitudinal arms (58, 60), and the fairing panels (48) are made of composite material.

## Patentansprüche

1. Antriebssystem für Luftfahrzeug (10), das ein Triebwerk mit Turbofan enthält, das mit einer Triebwerksgondel (12) umgeben ist, die einen ringförmigen Strömungsraum für einen Nebenstrom (34) begrenzt, sowie Einhängemittel (80, 84) zum Einhängen des Triebwerks an einen Tragmasten (16), der dazu bestimmt ist, an ein Strukturteil eines Luftfahrzeugs befestigt zu werden, wobei der stromabwärtige Teil der Gondel (12) eine innere Umlaufstruktur (36) aufweist, die innen den Strömungskanal für den Nebenstrom (34) um den Körper des Triebwerks herum begrenzt, **dadurch gekennzeichnet, dass** die innere Struktur (36) des stromabwärtigen Teils der Gondel ein starres Gerippe aufweist, das aus einem ringförmigen, stromaufwärtigen Rahmen (50), der über eine Bolzenverbindung an ein Zwischengehäuse (38) des Triebwerks befestigt ist, aus einem ringförmigen stromabwärtigen Rahmen (52), der Mittel (68, 76) zum Haltern eines Ausströmgehäuses (40) des Triebwerks aufweist, und aus längs verlaufenden Verbindungsarmen (54, 56, 58, 60) zum Verbinden dieser Rahmen (50, 52) gebildet ist, und dass der ringförmige, stromabwärtige Rahmen (52) dieser inneren Struktur (36) über Mittel (84) zur nachgiebigen bzw. gelenkigen Aufhängung an den Tragmasten (16) befestigt ist.

2. Antriebssystem nach Anspruch 1, **dadurch gekennzeichnet, dass** die Mittel zur Halterung des Ausströmgehäuses Schwenkarme (68) aufweisen, die gleichmäßig um die Achse des Triebwerks verteilt angeordnet sind und deren radial innenliegenden Enden über Kugelgelenke an eine starre Zylinderwand (42) des Ausströmgehäuses (40) angelenkt sind und deren radial außenliegenden Enden über Kugelgelenke an den ringförmigen, stromabwärtigen Rahmen (52) der inneren Struktur (36) der Triebwerksgondel angelenkt sind.

3. Antriebssystem nach Anspruch 2, **dadurch gekennzeichnet, dass** die Schwenkarme (68) sich im wesentlichen tangential zum Ausströmgehäuse (40) und in einer Ebene senkrecht zur Achse des Triebwerks erstrecken.

4. Antriebssystem nach einem der vorangehenden Ansprüche, **dadurch gekennzeichnet, dass** die Mittel (84) zur Aufhängung des ringförmigen, stromabwärtigen Rahmens (52) Schwenkarme (104, 110) aufweisen, die drehbar angelenkt sind und den Tragmasten (16) mit einem Scheitelteil des stromabwärtigen Rahmens (52) verbinden, sowie eine Schubstange (114) zur Aufnahme der Schubkraft.

5. Antriebssystem nach Anspruch 4, **dadurch gekennzeichnet, dass** der ringförmige, stromabwärtige Rahmen (52) einen Ring (98, 99, 100, 101, 102) mit U-förmigem Querschnitt aufweist, der eine Ringnut bildet, welche radial nach außen ausmündet und Mittel zur Anlenkung der Aufllängungschwenkarme aufweist.

6. Antriebssystem nach Anspruch 4 oder 5, **dadurch gekennzeichnet, dass** die Aufhängungsschwenkarme einen L-förmigen Dreipunkt-Schwenkarm (104) umfassen, bei dem ein Ende eines längeren Schenkels (106) über ein Kugelgelenk an den ringförmigen, stromabwärtigen Rahmen (52) angelenkt ist und ein Ende eines kürzeren Schenkels (108) an einem Ende eines weiteres Schwenkarms (110) angelenkt ist, dessen anderes Ende über ein Kugelgelenk an den ringförmigen, stromabwärtigen Rahmen (52) angelenkt ist.

7. Antriebssystem nach einem der Ansprüche 4 bis 6, **dadurch gekennzeichnet, dass** die Schubstange (114) zur Schubkraftaufnahme ausgehend vom Scheitelteil des stromabwärtigen Rahmens (52) axial nach stromabwärts ausgerichtet ist.

8. Antriebssystem nach einem der vorangehenden Ansprüche, **dadurch gekennzeichnet, dass** der Tragmast (16) einen stromaufwärtigen Teil (78) aufweist, der sich bis in Höhe des Zwischengehäuses (20, 38, 39) des Triebwerks erstreckt und über drei angelenkte Schwenkarme (90, 92, 94) mit einem Scheitelteil des Zwischengehäuses (20) verbunden ist, wobei zwei der Schwenkarme (90, 92) sich im wesentlichen radial erstrecken, während ein dritter Schwenkarm (94) sich im wesentlichen tangential zum Zwischengehäuse (20) erstreckt.

9. Antriebssystem nach einem der vorangehenden Ansprüche, **dadurch gekennzeichnet, dass** der stromaufwärtige (50) und der stromabwärtige (52) ringförmige Rahmen der Innenstruktur (36) der Triebwerksgondel über zwei längs verlaufende Arme (54, 56) verbunden sind, die sich in einer vertikalen Ebene erstrecken, die durch die Achse des Triebwerks verläuft, sowie über zwei längs verlaufende Seitenarme (58, 60), die sich in einer horizontalen Ebene erstrecken, die durch die Achse des Triebwerks verläuft.

10. Antriebssystem nach einem der vorangehenden Ansprüche, **dadurch gekennzeichnet, dass** Auskleidungsplatten (48) an das Gerippe der Innenstruktur (36) der Triebwerksgondel befestigt sind und im wesentlichen längs verlaufende, starre Führungswände (64) zum Führen des Nebenstroms (34) um den Tragmast herum aufweisen, wobei diese Wände (64) nachgiebige Verbindungsmittel zum Verbinden mit dem Tragmast (16) aufweisen.

11. Antriebssystem nach Anspruch 10, **dadurch gekennzeichnet, dass** die Auskleidungsplatten (48) im wesentlichen längs verlaufende Wände (66) aufweisen, die sich in einem dem Tragmast (16) diametral entgegengesetzten Teil des Strömungsraums für den Nebenstrom (34) zwecks Führung des Nebenstroms um Einrichtungen des Triebwerks herum erstrecken.

12. Antriebssystem nach einem der vorangehenden Ansprüche, **dadurch gekennzeichnet, dass** der ringförmige, stromabwärtige Rahmen (52) und zumindest einige der längs verlaufenden Arme (54, 56, 58, 60) der Innenstruktur (36) der Triebwerksgondel aus einer nickelhaltigen Legierung hergestellt sind.

13. Antriebssystem nach einem der vorangehenden Ansprüche, **dadurch gekennzeichnet, dass** der ringförmige, stromaufwärtige Rahmen (50) und die Auskleidungsplatten (48) der Innenstruktur (36) der Triebwerksgondel aus Titan bestehen.

14. Antriebssystem nach einem der vorangehenden Ansprüche, **dadurch gekennzeichnet, dass** zumindest einige Teile, darunter die Zugangsklappen der Auskleidungsplatten (48), der ringförmige, stromaufwärtige Rahmen (50), die längs verlaufenden Arme (58, 60 und die Auskleidungsplatten (48), aus einem Verbundmaterial hergestellt sind.
